# NEUE EUROPÄISCHE PATENTSCHRIFT

(11) **EP 0 239 821 B2**
(45) Veröffentlichungstag und Bekanntmachung des Hinweises auf die Entscheidung über den Einspruch: **24.11.1993**
(45) Hinweis auf die Patenterteilung: 20.06.1990
(21) Anmeldenummer: 87103060.7
(22) Anmeldetag: 04.03.1987
(51) Int. Cl.: A61C 13/265

(54) **T-Geschiebe zur lösbaren Befestigung von Zahnprothesen**
T-shaped attachment for fixing removable dental prosthesis
Attache en forme de T pour la fixation de prothèses dentaires amovibles

(30) Priorität: 04.04.1986 DE 3611322
(43) Veröffentlichungstag der Anmeldung: 07.10.1987
(73) Patentinhaber: Degussa Aktiengesellschaft, 60311 Frankfurt (DE)
(72) Erfinder: Schiwiora, Harry, D-7530 Pforzheim (DE); Ahr, Willi, D-7534 Birkenfeld 2 (DE); Schart, Alfred, D-75321 Olbronn/Dürnn 2 (DE)

(56) Entgegenhaltungen:
- EP-A- 0 085 781
- DE-A- 2 217 088
- US-A- 2 271 796
- US-A- 3 117 377
- US-A- 4 196 516

## Beschreibung

Die Erfindung betrifft ein T-Geschiebe zur lösbaren Befestigung von Zahnprothesen und Brücken am Restgebiß, bestehend aus einer Matrize und einer mit einem durchgehenden Schlitz versehenen, mittels einer konischen Schraube aktivierbaren Patrize, an deren Längsbalken ein Steg angebracht ist, der mit einem Schlitz versehen ist, welcher in den durch die Patrize durchgehenden Schlitz mündet.

T-Geschiebe werden in der Zahnprothetik in großer Zahl und vielen Ausführungsformen verwendet, um Prothesen und abnehmbare Brücken zu befestigen. Sie bestehen jeweils aus einer Patrize und einer die Patrize weitgehend umschließenden Matrize, wodurch ein fester Sitz der Patrize in der Matrize gewährleistet wird. Zumeist ist der Patrizenkörper von der okklusalen oder der gingivalen Seite aus geschlitzt. Durch Verbreitern des Schlitzes mit speziellen Werkzeugen werden die durch den Schlitz gebildeten Lamellen aufgebogen, wodurch die Patrize neben dem mehr oder weniger exakten Paßsitz in der Matrize eine zusätzliche Friktion erhält, also noch fester sitzt. Dieser Vorgang wird mit « Aktivierung » bezeichnet.

Die Koppelstelle zwischen Restzahnbestand und abnehmbarer Prothese ist ein Bereich, der im Mund besonders stark beansprucht wird.

Besonders bei Bewegungen um die transversale Achse werden die Schlitze allmählich wieder zusammengedrückt, ganz gleich ob die Schlitze im okklusalen odergingivalen Bereich der Patrize liegen. Da sich dadurch der Sitz der Prothese lockert, müssen diese T-Geschiebe in kurzen Zeitabständen jeweils erneut aktiviert werden.

Es werden auch T-Geschiebe verwendet, bei denen die Patrize mit einem durchgehenden Schlitz versehen ist und die Patrizenhälften durch einen partiell geschlitzten Steg zusammengehalten werden, der am Längsbalken der Patrize angebracht ist. Die Spreizung des Schlitzes erfolgt durch eine mit einem konischen Kopf versehene Schraube, die sagittal in die Stirnfläche der geschlitzten Patrize eingedreht wird. Ein solches T-Geschiebe wird z.B. in der US-PS 4 196 516 beschrieben. Der auseinandergetriebene Patrizenkörper ist nach der Aktivierung aber starr, da sich die an sich federnden Patrizenhälften am Schraubenkopf abstützen. Außerdem sind durch die Lage der Schraube an der Stirnfläche der Patrize die Patrizenteile mechanisch geschwächt. Bei starr arretierten Teilen ist der richtige Punkt der Friktion nur schwer zu finden, sodaß bei einer Überaktivierung die Patrize in der Matrize leicht verklemmt oder bei zu geringer Aktivierung der Friktion ungenügend ist.

Es war daher Aufgabe der vorliegenden Erfindung, ein T-Geschiebe zur lösbaren Befestigung von Zahnprothesen und Brücken am Restgebiß zu schaffen, bestehend aus einer Matrize und einer mit einem durchgehenden Schlitz versehenen, mittels einer konischen Schraube aktivierbaren Patrize, an deren Längsbalken ein Steg angebracht ist, der mit einem Schlitz versehen ist, welcher in den durch die Patrize durchgehenden Schlitz mündet. Dieses T-Geschiebe sollte auch nach der Aktivierung noch federnd sein und so eine individuell einstellbare, gleichmäßige Friktion der Patrize in der Matrize ermöglichen.

Diese Aufgabe wird erfindungsgemäß dadurch gelöst, daß die Schraube innerhalb des Stegs parallel zum Schlitzgrund in den Schlitz einführbar ist, und daß der Konus im Schaft bereich der Schraube angeordnet ist, wobei der Konus am Schraubenschaft bei eingedrehter Schraube im mittleren Bereich des Steges sich befindet, bezogen auf die Gesamthöhe des Steges bzw. der Patrize.

Vorzugsweise ist die Schraube im Bereich des Schlitzgrundes in den Schlitz einführbar.

Als vorteilhaft hat es sich erwiesen, wenn der Konus der Schraube einen Winkel von 5 bis 35° besitzt, insbesondere einen Winkel von 15 bis 25°.

Das erfindungsgemäße T-Geschiebe hat den Vorteil, daß das Aktiviersystem außerhalb der eigentlichen Patrize liegt. Dadurch wird die Patrize nicht mechanisch durch eine Schraubenbohrung geschwächt und die Federung der Patrizenhälften bleibt erhalten. Die beim Kaugeschehen in den verschiedenen Achsen angreifenden Kräfte werden daher elastisch dämpfend abgefangen und können die an der Matrize anliegenden Patrizenteile nicht deformieren.

Durch die Lage des Konus im mittleren Bereich der Gesamthöhe der Patrize werden die beiden Patrizenhälften parallel gespreizt. Dadurch wird überdie gesamte Geschiebefläche eine gleichmäßige Friktion erreicht, deren Grad individuell eingestellt werden kann.

Die Matrize kann eingegossen werden, da beim Einguß entstehende Deformationen der Matrize durch die federnden Schenkel der Patrize ausgeglichen werden. Das Eingießen der Matrize ist kostengünstiger als das Einlöten.

Die Verankerung der Patrize zur Prothese findet vorzugsweise durch eine Schraubvorrichtung statt, so daß die Patrize auswechselbar ist und keiner thermischen Behandlung bei der Montage unterworfen werden muß, die eine Verringerung der Festigkeit bewirken könnte.

Durch die Auswechselbarkeit der Patrize können billige hochfeste Legierungen verwendet werden, die eine grazilere Gestaltung der Patrize zulassen.

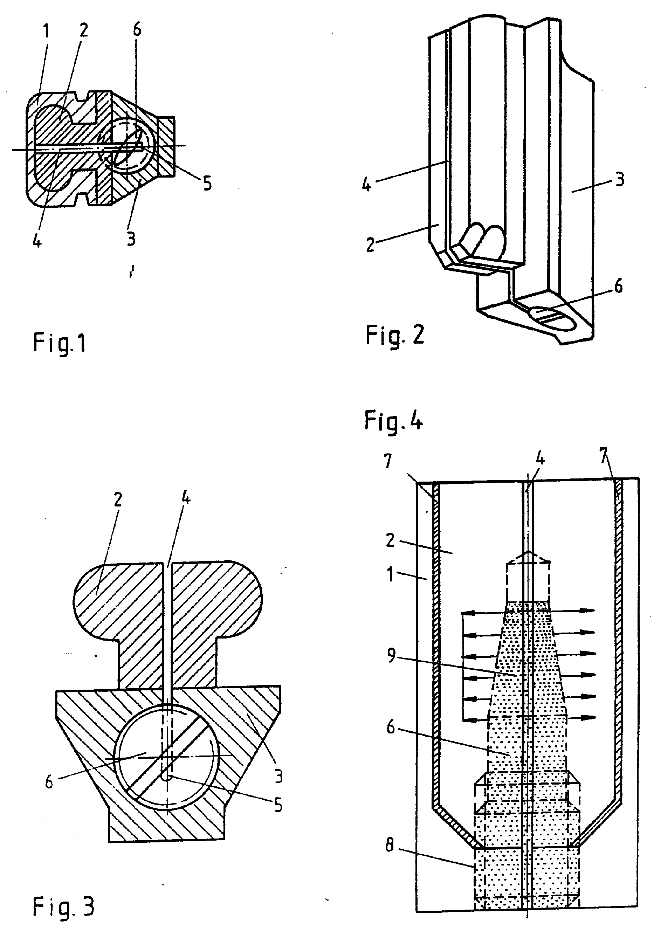

Die Abbildungen 1 bis 4 zeigen schematisch das erfindungsgemäße T-Geschiebe in beispielhafter Ausführungsform. Dabei zeigt Abbildung 2 eine perspektivische Ansicht einer Patrize, Abbildung 3 einen Querschnitt durch eine andere Patrizenform und Abbildung 4 einen Längsschnitt durch eine konische Schraube.

Das T-Geschiebe besteht aus einer Matrize (1) und einer Patrize (2), an deren Längsbalken ein Steg (3) angebracht ist. Die Patrize (2) ist vertikal in Längsrichtung durchgehend mit einem Schlitz (4) versehen, der die Patrize (2) in zwei Hälften teilt. Der Schlitz (4) setzt sich bis etwa in die Mitte des Steges (3) fort, so daß zwei federnde Schenkel entstehen. Parallel zum Schlitzgrund (5) und vorzugsweise im unmittelbaren Bereich des Schlitzgrundes (5) wird eine konische Schraube (6) in den Schlitz (4) eingedreht, die die Patrizenhälften auseinanderdrückt und die gewünschte Friktion zwischen Patrize (2) und Matrize (1) bewirkt. Der Aufweitungsbereich (7) ist in Abbildung 4 angedeutet.

Die Schraube (6) besitztvorteilhafterweise einen mit einem Gewinde versehenen Schraubenkopf (8), während der Konus (9) am Schraubenschaft angeordnet ist und im mittleren Bereich des Steges (3) bzw. der Patrize (2), bezogen auf die Gesamthöhe der Patrize (2), sich befindet.

## Patentansprüche

1. T-Geschiebe zur lösbaren Befestigung von Zahnprothesen und Brücken am Restgebiß, bestehend aus einer Matrize (1) und einer mit einem durchgehenden Schlitz (4) versehenen, mittels einer konischen Schraube (6) aktivierbaren Patrize (2), an deren Längsbalken ein Steg (3) angebracht ist, der mit einem Schlitz versehen ist, welcher in den durch die Patrize durchgehenden Schlitz mündet, dadurch gekennzeichnet, daß die Schraube (6) innerhalb des Stegs (3) parallel zu dem Schlitzgrund (5) in den Schlitz (4) einführbar ist, und daß der Konus (9) im Schaftbereich der schraube (6) angeordnet ist, wobei der Konus (9) bei eingedrehter Schraube (6) im mittleren Bereich des Steges (3) sich befindet, bezogen auf die Gesamthöhe.

2. T-Geschiebe nach Anspruch 1, dadurch gekennzeichnet, daß die Schraube (6) im Bereich des Schlitzgrundes (5) in den Schlitz (4) einführbar ist.

3. T-Geschiebe nach Anspruche 1 und 2, dadurch gekennzeichnet, daß der Konus (9) der Schraube (6) einen Winkel von 5 bis 35° besitzt.

4. T-Geschiebe nach Anspruch 1 bis 3, dadurch gekennzeichnet, daß der Konus (9) der Schraube (6) einen Winkel von 15 bis 25° aufweist.

## Claims

1. A T-plate for releasably fixing false teeth and bridges to the remaining teeth, consisting of a female part (1) and a male part (2) with a through slot (4) which is designed to be activated by a conical screw (6) and on the longitudinal bar of which is arranged a web (3) provided with a slot which opens into the slot extending through the male part, characterized in that the screw (6) is designed to be inserted into the slot (4) within the web (3) parallel to the slot base (5) and in that the cone (9) is arranged in the shank region of the screw (6), the cone (9) being situated in the centre region of the web (3), based on the overall height, when the screw (6) is screwed in.

2. A T-plate as claimed in claimed 1, characterized in that the screw (6) is designed to be inserted into the slot (4) in the region of the slot base (5).

3. A T-plate as claimed in claims 1 and 2, characterized in that the cone (9) of the screw (6) has an angle of 5 to 35°.

4. A T-plate as claimed in claims 1 to 3, characterized in that the cone (9) of the screw (6) has an angle of 15 to 25°.

## Revendications

1. Implant en T pour la fixation sur la dentition restante de protèses dentaires et de bridges amovible, constitués d'une matrice (1) et d'un poinçon (2) susceptible d'être actionné au moyen d'une vis conique (6) munie d'une fente (4) allant de part en part, sur le bras longitudinal duquel est placé un barreau muni d'une fente qui débouche dans la fente traversant le poinçon, caractérisé en ce que la vis (6) peut être insérée à l'intérieur du barreau, parallèlement au fond de la fente (5), dans la fente (4) et que le cône (9) est disposé dans la zone de tige de la vis (6), dans lequel le cône (9) qui se trouve à l'aide de la vis insérée dans la zone médiane du barreau (3) rapporté à la hauteur totale.

2. Implant en T selon la revendication 1, caractérisé en ce que la vis (6) peut être insérée dans la fente (4) dans la zone du fond de la fente (5).

3. Implant en T selon les revendications 1 et 2, caractérisé en ce que le cône (9) de la vis (6) présente un angle allant de 5 à 35°.

4. Implant en T selon les revendications 1 à 3, caractérisé en ce que le cône (9) de la vis (6) présente un angle allant de 15 à 25°.
